# FASCICULE DE BREVET EUROPEEN

(11) **EP 3 857 030 B1**
(45) Date de publication et mention de la délivrance du brevet: **11.05.2022**
(21) Numéro de dépôt: 19794614.8
(22) Date de dépôt: 24.09.2019
(51) Int. Cl.: F01D 25/24, F01D 11/08, F16B 35/00, F16B 39/06, F16B 23/00

(54) **ENSEMBLE POUR UNE TURBINE DE TURBOMACHINE ET TURBOMACHINE ASSOCIÉE**
ANORDUNG FÜR EINE TURBINE EINER STRÖMUNGSMASCHINE UND ZUGEHÖRIGE STRÖMUNGSMASCHINE
ASSEMBLY FOR A TURBINE OF A TURBOMACHINE AND CORRESPONDING TURBOMACHINE

(30) Priorité: 25.09.2018 FR 1858713
(43) Date de publication de la demande: 04.08.2021
(73) Titulaire: SAFRAN AIRCRAFT ENGINES, 75015 Paris (FR)
(72) Inventeur: DANIS, Antoine, Claude, Michel, Etienne, 77550 MOISSY-CRAMAYEL (FR); JARROSSAY, Clément, 77550 MOISSY-CRAMAYEL (FR); QUENNEHEN, Lucien, Henri, Jacques, 77550 MOISSY-CRAMAYEL (FR); TABLEAU, Nicolas, Paul, 77550 MOISSY-CRAMAYEL (FR); ILLAND, Hubert, Jean-Yves, 77550 MOISSY-CRAMAYEL (FR)
(74) Mandataire: Cabinet Beau de Loménie
(86) Numéro de dépôt international: PCT/FR2019/052234
(87) Numéro de publication internationale: WO 2020/065199

(56) Documents cités:
- FR-A1- 3 064 022
- US-A- 1 753 154

## Description

### Arrière-plan de l'invention

La présente invention se rapporte au domaine général des moteurs de turbomachines aéronautiques. Toutefois, la présente invention pourrait également s'appliquer à tout autre moteur à turbine à gaz.

Plus spécifiquement, la présente invention se rapporte à un ensemble pour une turbine de turbomachine, ainsi qu'à une turbomachine.

Les matériaux composites à matrice céramique, ou CMC, sont connus pour conserver leurs propriétés mécaniques à des températures élevées, ce qui les rend aptes à constituer des éléments de structure chaude.

Dans des moteurs aéronautiques à turbine à gaz, l'amélioration du rendement et la réduction de certaines émissions polluantes conduisent à rechercher un fonctionnement à des températures toujours plus élevées. Dans le cas d'ensembles d'anneau de turbine entièrement métalliques, il est nécessaire de refroidir tous les éléments de l'ensemble et en particulier l'anneau de turbine qui est soumis à des flux très chauds, typiquement supérieurs à la température supportable par le matériau métallique. Ce refroidissement a un impact significatif sur la performance du moteur puisque le flux de refroidissement utilisé est prélevé sur le flux principal du moteur. En outre, l'utilisation de métal pour l'anneau de turbine limite les possibilités d'augmenter la température au niveau de la turbine, ce qui permettrait pourtant d'améliorer les performances des moteurs aéronautiques.

Par ailleurs, un ensemble d'anneau de turbine métallique se déforme sous l'effet des flux thermiques, ce qui modifie les jeux au niveau de la veine d'écoulement et, par conséquent, les performances de la turbine.

C'est pourquoi l'utilisation de CMC pour différentes parties chaudes des moteurs a déjà été envisagée, d'autant que les CMC présentent comme avantage complémentaire une masse volumique inférieure à celle de métaux réfractaires traditionnellement utilisés.

Ainsi, la réalisation de secteurs d'anneau de turbine en une seule pièce en CMC est notamment décrite dans le document US 2012/0027572 ou dans le document FR 3 064 022. Les secteurs d'anneau comportent une base dont la face radialement interne est destinée à délimiter une veine de gaz de la > turbomachine et une face radialement externe à partir de laquelle s'étendent radialement deux pattes dont les extrémités sont maintenues entre les deux brides d'une structure métallique de support d'anneau.

L'utilisation de secteurs d'anneau en CMC permet ainsi de réduire significativement la ventilation nécessaire au refroidissement de l'anneau de turbine. Toutefois, le CMC ayant un comportement mécanique différent d'un matériau métallique, son intégration ainsi que la manière de le positionner au sein de la turbine ont dû être repensés. En effet, le CMC ne supporte pas les montages frettés (usuellement employés pour les anneaux métalliques) et sa dilation thermique est plus faible qu'un matériau métallique. Aussi, pour résoudre cette problématique, il est connu de maintenir les pattes des secteurs d'anneau à l'aide de pions axiaux engagés chacun dans l'une des brides de la structure de support d'anneau.

Ce type de montage présente cependant l'inconvénient qu'un jeu radial subsiste dans les trous des pattes des secteurs d'anneau prévus pour le passage des pions axiaux, ce jeu pouvant entraîner un déplacement radial de l'anneau au sein de la turbine. Or, un tel déplacement se traduit directement par une variation du jeu en sommet d'aube, et donc par un impact direct sur les performances moteur.

### Objet et résumé de l'invention

La présente invention a donc pour but principal de proposer un ensemble pour une turbine qui ne présente pas de tels inconvénients.

Ce but est atteint grâce à un ensemble pour une turbine de turbomachine s'étendant autour d'un axe, comprenant au moins un secteur angulaire d'anneau en matériau composite à matrice céramique et un carter de support disposé autour de l'au moins un secteur d'anneau, le carter de support comprenant deux brides, respectivement une bride amont et une bride aval, entre lesquelles chaque secteur d'anneau est disposé, chaque secteur d'anneau comprenant une base qui présente une face radialement interne et une face radialement externe à partir de laquelle s'étendent radialement deux pattes, les pattes de chaque secteur d'anneau étant maintenues entre les deux brides du carter de support par des pions axiaux engagés chacun dans l'une des brides du carter de support d'anneau et dans la patte du secteur d'anneau en regard de ladite bride, l'ensemble comprenant en outre, pour chaque secteur d'anneau, au moins un pion radial de maintien vissé dans le carter de support et venant en appui radial contre une patte de l'au moins un secteur d'anneau pour maintenir le secteur d'anneau en position, et conformément à l'invention, des moyens d'anti-rotation pour bloquer en rotation l'au moins un pion radial de maintien.

L'ensemble propose de recourir à des pions radiaux de maintien qui viennent en contact direct avec les pattes des secteurs d'anneau pour maintenir l'anneau en position et ainsi éviter tout déplacement radial de celui-ci au sein de la turbine. Par ailleurs, ces pions radiaux de maintien sont vissés dans le carter de support, ce qui leur confère un réglage en position pour rattraper le jeu radial résiduel au niveau des pions axiaux. En outre, l'ensemble remarquable en ce qu'il comprend, selon l'invention, des moyens d'anti-rotation pour bloquer en rotation les pions radiaux de maintien, ce qui évite que ces derniers se desserrent.

Enfin, les pions radiaux de maintien de l'ensemble sont démontables.

De préférence, chaque pion radial de maintien est vissé dans une douille montée dans un carter de support. Cette douille, qui constitue une pièce intermédiaire pour recevoir le pion radial de maintien sans avoir à recourir à une soudure.

Dans ce cas, chaque pion radial de maintien est avantageusement bloqué en rotation à l'intérieur de la douille par une goupille insérée radialement et qui est disposée entre le pion radial de maintien et la douille. Ainsi, la douille accueille l'ensemble pion radial de maintien et goupille, ce qui rend la solution globale démontable et réparable.

Dans ce cas, chaque pion radial de maintien peut comprendre à sa périphérie au moins un perçage borgne, qui comprend de préférence un taraudage, s'étendant dans le sens longitudinal du pion radial de maintien pour permettre d'insérer la goupille entre le pion radial de maintien et la douille.

De même, chaque pion radial de maintien peut comprendre à sa périphérie une pluralité de perçages borgnes régulièrement répartis autour d'un axe longitudinal du pion radial de maintien.

Toujours dans ce cas, chaque douille peut comprendre un alésage fileté pour recevoir le pion radial de maintien, l'alésage de la douille étant muni d'au moins un taraudage s'étendant dans le sens longitudinal de la douille pour permettre de visser le pion radial de maintien.

Pour chaque secteur d'anneau, les deux pattes sont de préférence maintenues chacune entre les deux brides du carter de support par deux pions axiaux décalés circonférentiellement l'un de l'autre, et à chaque pion axial est de préférence associé un pion radial de maintien venant en appui radial contre la patte correspondante du secteur d'anneau au droit du pion axial.

Chaque pion radial de maintien peut comprendre une empreinte six pans creux pour permettre son vissage dans la douille correspondante. Chaque douille peut être montée dans le carter de support et maintenue dans celui-ci par frettage.

L'invention a également pour objet une turbomachine comprenant un ensemble tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en coupe longitudinale d'un ensemble d'anneau de turbine selon l'invention ;
- la figure 2 est une vue en perspective et en éclaté montrant l'assemblage d'un secteur d'anneau de turbine selon l'invention ;
- la figure 3 est une vue en perspective d'un pion radial de maintien de l'ensemble d'anneau de turbine selon l'invention ; et
- la figure 4 montre un exemple de blocage en rotation selon l'invention du pion radial de maintien de la figure 3.

### Description détaillée de l'invention

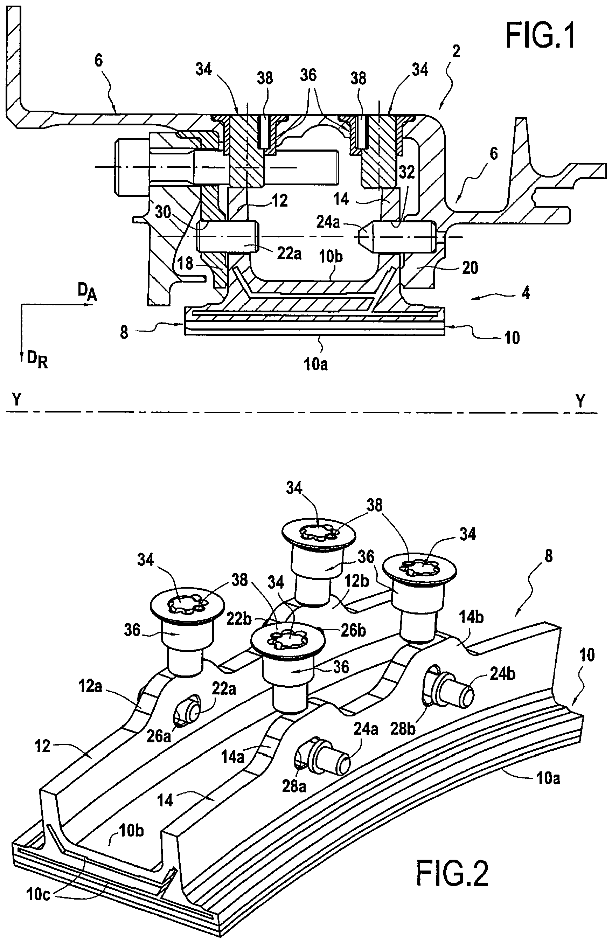

La figure 1 représente, en coupe longitudinale, un ensemble 2 de turbine s'étendant autour d'un axe Y-Y selon l'invention.

Cet ensemble 2 comprend notamment un anneau de turbine 4 en matériau composite à matrice céramique (CMC) et un carter de support 6 de l'anneau métallique. L'anneau de turbine 4 entoure un ensemble de pales rotatives (non représentées).

Par ailleurs, l'anneau de turbine 4 est formé d'une pluralité de secteurs d'anneau 8 qui sont mis bout à bout circonférentiellement pour former un anneau. Sur la figure 1, la flèche D_{A} indique la direction axiale de l'anneau de turbine tandis que la flèche D_{R} indique la direction radiale de l'anneau de turbine.

Comme représenté plus précisément sur la figure 2, chaque secteur d'anneau 8 présente une section sensiblement en forme de Pi (ou π) inversé avec une partie 10 formant une base.

Cette partie 10 formant une base est munie d'une face radialement interne 10a qui est destinée à délimiter une veine de gaz et qui est typiquement munie d'une couche de revêtement abradable (non représentée sur les figures).

Deux pattes - à savoir une patte amont 12 et une patte aval 14 - s'étendent radialement à partir de la face radialement externe 10b de la partie 10 formant base. Ces pattes 12, 14 s'étendent sur toute la largeur du secteur d'anneau 8 (dans le sens circonférentiel).

Comme représenté sur la figure 1, le carter de support 6 peut faire partie intégrante d'un carter de turbine et est positionné autour de l'anneau de turbine. Le carter de support peut alternativement être solidarisé au carter de turbine. Il comprend une bride annulaire amont 18 et une bride annulaire aval 20 qui s'étendent radialement vers l'intérieur.

Les pattes 12, 14 de chaque secteur d'anneau 8 sont montées en précontrainte entre les brides annulaires 18, 20 respectives de la structure de support d'anneau.

Par ailleurs, les secteurs d'anneau sont maintenus par des pions axiaux de blocage. Plus précisément, les pattes respectives de ces derniers sont maintenues entre les deux brides du carter de support par des pions axiaux 22, 24 qui sont décalés circonférentiellement l'un par rapport à l'autre.

Comme représenté sur la figure 2, la patte amont 12 de chaque secteur d'anneau 8 est munie, au niveau de deux renflements radiaux 12a, 12b, de deux trous axiaux 26a, 26b décalés circonférentiellement l'un par rapport à l'autre et aptes à être traversés chacun par un pion axial de blocage 22a, 22b.

De même, la patte aval 14 de chaque secteur d'anneau 8 est munie, au niveau de deux renflements radiaux 14a, 14b, de deux trous axiaux 28a, 28b décalés circonférentiellement l'un par rapport à l'autre et aptes à être traversés chacun par un pion axial de blocage 24a, 24b.

Par ailleurs, la bride amont 18 du carter de support 6 comprend une pluralité de trous axiaux 30 décalés circonférentiellement les uns par rapport aux autres. De même, la bride aval 20 comprend une pluralité de trous axiaux 32 décalés circonférentiellement les uns par rapport aux autres. Ces trous 30, 32 sont destinés à être traversés chacun par un pion axial de blocage 22a, 22b, 24a, 24b.

En outre, l'étanchéité inter-secteurs est assurée par des languettes d'étanchéité (non représentée sur les figures) logées dans des rainures 10c se faisant face dans les faces circonférentiellement en regard de deux secteurs d'anneau 8 mis bout-à-bout circonférentiellement.

Chaque secteur d'anneau 8 décrit ci-avant est réalisé en matériau composite à matrice céramique (CMC) par formation d'une préforme fibreuse ayant une forme voisine de celle du secteur d'anneau et densification du secteur d'anneau par une matrice céramique.

Pour la réalisation de la préforme fibreuse, on peut utiliser des fils en fibres céramique, par exemple des fils en fibres SiC tels que ceux commercialisés par la société japonaise Nippon Carbon sous la dénomination "Nicalon", ou des fils en fibres de carbone.

La préforme fibreuse est avantageusement réalisée par tissage tridimensionnel, ou tissage multicouches avec aménagement de zones de déliaison permettant d'écarter les parties de préformes correspondant aux pattes 12 et 14 des secteurs d'anneau.

Le tissage peut être de type interlock. D'autres armures de tissage tridimensionnel ou multicouches peuvent être utilisées comme par exemple des armures multi-toile ou multi-satin. On pourra se référer au document WO 2006/136755.

Après tissage, l'ébauche peut être mise en forme pour obtenir une préforme de secteur d'anneau qui est consolidée et densifiée par une matrice céramique, la densification pouvant être réalisée notamment par infiltration chimique en phase gazeuse (CVI) qui est bien connue en soi.

Un exemple détaillé de fabrication de secteurs d'anneau en CMC est notamment décrit dans le document US 2012/0027572.

La structure de support d'anneau 6 est quant à elle réalisée en un matériau métallique tel qu'un alliage Waspaloy^{®} ou connu sous le nom de "inconel 718".

Il est prévu, pour chaque secteur d'anneau 8, au moins un pion radial de maintien vissé dans le carter de support 6 et venant en appui radial contre chaque patte du secteur d'anneau pour maintenir l'anneau de turbine en position. L'invention prévoit des moyens pour bloquer en rotation ces pions radiaux de maintien.

Comme représenté sur les figures 1 et 2, à chaque pion axial de blocage 22a, 22b, 24a, 24b est associé un pion radial de maintien 34 venant en appui radial contre la patte correspondante du secteur d'anneau au droit du pion axial.

Plus précisément, les pions de maintien 34 viennent en appui radial contre l'un des renflements radiaux 12a, 12b de la patte amont 12 du secteur d'anneau et contre l'un des renflements radiaux 14a, 14b de la patte aval 14 dudit secteur d'anneau.

Cet appui radial permet de réduire le jeu radial subsistant dans les trous 26a, 26b, 28a, 28b des pattes du secteur d'anneau, et ainsi d'éviter tout déplacement radial du secteur d'anneau.

Chaque pion de maintien 34 est vissé dans une douille 36 elle-même montée dans le carter de support 6 et maintenue dans celui-ci par exemple par frettage. A cet effet, chaque douille 36 comprend un alésage 36a qui est fileté sur toute sa hauteur (le filetage est non représenté sur les figures).

De plus, il est prévu que chaque pion radial de maintien 34 soit bloqué en rotation à l'intérieur de la douille 36 correspondante par une goupille 38 venant s'insérer radialement dans la douille entre le pion radial de maintien et la douille.

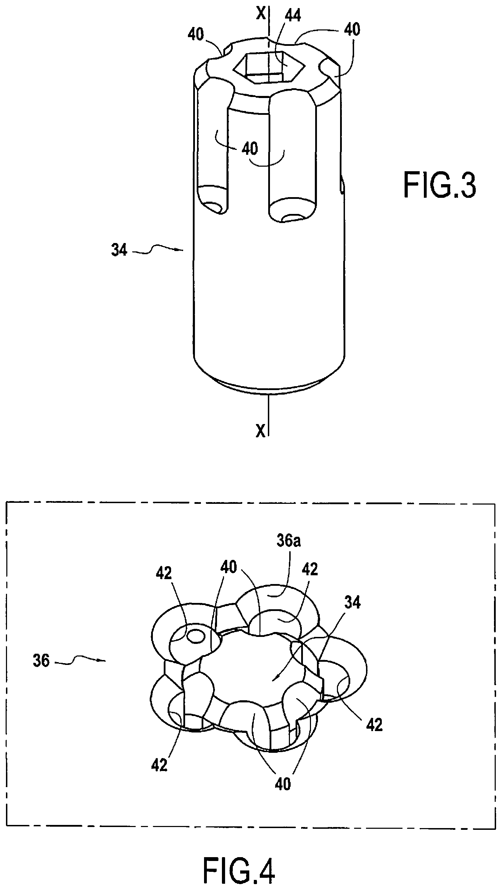

A cet effet, et comme représenté plus en détails sur les figures 3 et 4, chaque pion radial de maintien 34 comprend, à sa périphérie extérieure, au moins un taraudage 40 qui s'étend dans le sens longitudinal du pion radial de maintien (c'est-à-dire selon son axe longitudinal X-X) sur au moins une partie de sa hauteur.

De préférence, il est prévu une pluralité de taraudages 40 qui sont régulièrement répartis autour de l'axe longitudinal X-X de chaque pion radial de maintien 34. Ainsi, sur l'exemple des figures 3 et 4, ces taraudages sont au nombre de six.

De même, et de façon complémentaire, l'alésage fileté 36a de chaque douille est muni d'au moins un taraudage 42 s'étendant dans le sens longitudinal de la douille.

Les taraudages 40 des pions radiaux de maintien et les taraudages 42 des douilles 36 forment des découpes qui correspondent sensiblement au gabarit des goupilles 38 afin de permettre d'insérer ces dernières entre les pions radiaux de maintien et les douilles. Lorsque les goupilles sont insérées, elles empêchent les pions radiaux de maintien de tourner autour de leur axe longitudinal X-X et les bloquent ainsi en rotation.

On notera que comme représenté sur la figure 3, chaque pion radial de maintien 34 peut comprendre une empreinte six pans creux 44 pour permettre son vissage dans l'alésage de la douille correspondante.

## Revendications

1. Ensemble (2) pour une turbine de turbomachine s'étendant autour d'un axe (Y-Y), comprenant au moins un secteur d'anneau (8) en matériau composite à matrice céramique et un carter de support (6) disposé autour de l'au moins un secteur d'anneau (8), le carter de support (6) comprenant deux brides, respectivement une bride amont (18) et une bride aval (20), entre lesquelles chaque secteur d'anneau (8) est disposé, chaque secteur d'anneau comprenant une base qui présente une face radialement interne (10a) et une face radialement externe (10b) à partir de laquelle s'étendent radialement deux pattes (12, 14), les pattes (12, 14) de chaque secteur d'anneau (8) étant maintenues entre les deux brides (18, 20) du carter de support (6) par des pions axiaux (22a, 22b, 24a, 24b) engagés chacun dans l'une des brides (18, 20) du carter de support d'anneau (8) et dans la patte (12, 14) du secteur d'anneau (8) en regard de ladite bride (18, 20), l'ensemble (2) comprenant en outre, pour chaque secteur d'anneau (8), au moins un pion radial de maintien (34) vissé dans le carter de support (6) et venant en appui radial contre une patte (12, 14) de l'au moins un secteur d'anneau (8) pour maintenir le secteur d'anneau (8) en position, et l'ensemble (2) étant **caractérisé en ce qu'**il comprend en outre des moyens d'anti-rotation (38) pour bloquer en rotation l'au moins un pion radial de maintien (34).

2. Ensemble selon la revendication 1, dans lequel chaque pion radial de maintien (34) est vissé dans une douille (36) montée dans le carter de support (6).

3. Ensemble selon la revendication 2, dans lequel chaque pion radial de maintien (34) est bloqué en rotation à l'intérieur de la douille (36) par une goupille (38) insérée radialement et qui est disposée entre le pion radial de maintien (34) et la douille (36).

4. Ensemble selon la revendication 3, dans lequel chaque pion radial de maintien (34) comprend à sa périphérie au moins un perçage borgne (40), qui comprend de préférence un taraudage s'étendant dans le sens longitudinal du pion radial de maintien (34) pour permettre d'insérer la goupille (38) entre le pion radial de maintien (34) et la douille (36).

5. Ensemble selon la revendication 4, dans lequel chaque pion radial de maintien (34) comprend à sa périphérie une pluralité de perçages borgnes (40) régulièrement répartis autour d'un axe longitudinal (X-X) du pion radial de maintien (34).

6. Ensemble selon l'une des revendications 4 et 5, dans lequel chaque douille (36) comprend un alésage (36a) taraudé pour recevoir le pion radial de maintien (34), l'alésage (36a) de la douille (36) étant muni d'au moins un taraudage (42) s'étendant dans le sens longitudinal de la douille pour permettre de visser le pion radial de maintien (34).

7. Ensemble selon l'une quelconque des revendications 1 à 6, dans lequel, pour chaque secteur d'anneau (8), les deux pattes (12, 14) sont maintenues chacune entre les deux brides (18, 20) du carter de support (6) par deux pions axiaux (22a, 22b, 24a, 24b) décalés circonférentiellement l'un de l'autre, et à chaque pion axial (22a, 22b, 24a, 24b) est associé un pion radial de maintien (34) venant en appui radial contre la patte (12, 14) correspondante du secteur d'anneau (8) au droit du pion axial (22a, 22b, 24a, 24b).

8. Ensemble selon l'une quelconque des revendications 2 à 7, dans lequel chaque pion radial de maintien (34) comprend une empreinte six pans creux (44) pour permettre son vissage dans la douille (36) correspondante.

9. Ensemble selon l'une quelconque des revendications 2 à 8, dans lequel chaque douille (36) est montée dans le carter de support (6) et maintenue dans celui-ci par frettage.

10. Turbomachine comprenant un ensemble (2) selon l'une quelconque des revendications 1 à 9.

## Patentansprüche

1. Anordnung (2) für eine Turbine einer Strömungsmaschine, die sich um eine Achse (Y-Y) erstreckt und mindestens einen Ringsektor (8) aus Verbundmaterial mit Keramikmatrix und ein Traggehäuse (6) umfasst, das um den mindestens einen Ringsektor (8) angeordnet ist, wobei das Traggehäuse (6) zwei Flansche, einen stromaufwärtigen Flansch (18), beziehungsweise einen stromabwärtigen Flansch (20), umfasst, zwischen denen jeder Ringsektor (8) angeordnet ist, wobei jeder Ringsektor eine Basis umfasst, die eine radial innere Seite (10a) und eine radial äußere Seite (10b) aufweist, ausgehend von der sich radial zwei Laschen (12, 14) erstrecken, wobei die Laschen (12, 14) von jedem Ringsektor (8) durch axiale Stifte (22a, 22b, 24a, 24b), die jeweils in einem der Flansche (18, 20) des Ringtraggehäuses (8) und in der Lasche (12, 14) des Ringsektors (8) dem Flansch (18, 20) gegenüberliegend in Eingriff sind, zwischen den beiden Flanschen (18, 20) des Traggehäuses (6) gehalten werden, wobei die Anordnung (2) ferner für jeden Ringsektor (8) mindestens einen radialen Haltestift (34) umfasst, der in das Traggehäuse (6) geschraubt ist und radial gegen eine Lasche (12, 14) des mindestens einen Ringsektors (8) in Auflage gelangt, um den Ringsektor (8) an seiner Position zu halten, und die Anordnung (2) **dadurch gekennzeichnet ist, dass** sie ferner Drehsicherungsmittel (38) zum Sperren der Drehung des mindestens einen radialen Haltestifts (34) umfasst.

2. Anordnung nach Anspruch 1, wobei jeder radiale Haltestift (34) in eine Buchse (36) geschraubt ist, die in dem Traggehäuse (6) montiert ist.

3. Anordnung nach Anspruch 2, wobei die Drehung von jedem radialen Haltestift (34) im Inneren der Buchse (36) durch einen Bolzen (38) gesperrt ist, der radial eingesetzt ist und der zwischen dem radialen Haltestift (34) und der Buchse (36) angeordnet ist.

4. Anordnung nach Anspruch 3, wobei jeder radiale Haltebolzen (34) an seinem Umfang mindestens eine Sackbohrung (40) umfasst, die vorzugsweise ein Gewinde umfasst, das sich in der Längsrichtung von dem radialen Haltestift (34) erstreckt, um das Einsetzen des Bolzens (38) zwischen dem radialen Haltestift (34) und der Buchse (36) zu ermöglichen.

5. Anordnung nach Anspruch 4, wobei jeder radiale Haltestift (34) an seinem Umfang eine Vielzahl von Sackbohrungen (40) umfasst, die gleichmäßig um eine Längsachse (X-X) des radialen Haltestifts (34) verteilt sind.

6. Anordnung nach einem der Ansprüche 4 und 5, wobei jede Buchse (36) eine Gewindebohrung (36a) zum Aufnehmen des radialen Haltestifts (34) umfasst, wobei die Bohrung (36a) der Buchse (36) mit mindestens einem Gewinde (42) versehen ist, das sich in der Längsrichtung der Buchse erstreckt, um das Schrauben des radialen Haltestifts (34) zu ermöglichen.

7. Anordnung nach einem der Ansprüche 1 bis 6, wobei für jeden Ringsektor (8) die zwei Laschen (12, 14) durch zwei axiale Stifte (22a, 22b, 24a, 24b), die in Umfangsrichtung voneinander versetzt sind, jeweils zwischen den beiden Flanschen (18, 20) des Traggehäuses (6) gehalten werden und jedem axialen Stift (22a, 22b, 24a, 24b) ein radialer Haltestift (34) zugehörig ist, der senkrecht zum axialen Stift (22a, 22b, 24a, 24b) gegen die entsprechende Lasche (12, 14) des Ringsektors (8) in radiale Auflage gelangt.

8. Anordnung nach einem der Ansprüche 2 bis 7, wobei jeder radiale Haltestift (34) eine Innensechskantaussparung (44) umfasst, um sein Schrauben in die entsprechende Hülse (36) zu ermöglichen.

9. Anordnung nach einem der Ansprüche 2 bis 8, wobei jede Buchse (36) in dem Traggehäuse (6) montiert ist und durch Presspassung darin gehalten wird.

10. Strömungsmaschine, die eine Anordnung (2) nach einem der Ansprüche 1 bis 9 umfasst.

## Claims

1. An assembly (2) for a turbomachine turbine extending about an axis (Y-Y), comprising at least one ring sector (8) made of ceramic matrix composite material and a support casing (6) disposed around the at least one ring sector (8), the support casing (6) comprising two flanges, respectively an upstream flange (18) and a downstream flange (20), between which each ring sector (8) is disposed, each ring sector comprising a base that has a radially internal face (10a) and a radially external face (10b) from which radially extend two lugs (12, 14), the lugs (12, 14) of each ring sector (8) being retained between the two flanges (18, 20) of the support casing (6) by axial pins (22a, 22b, 24a, 24b) each engaged in one of the flanges (18, 20) of the ring support casing (8) and in the lug (12, 14) of the ring sector (8) facing said flange (18, 20), the assembly (2) further comprises, for each ring sector (8), at least one radial retaining pin (34) screwed into the support casing (6) and coming to radially bear against a lug (12, 14) of the at least one ring sector (8) to retain the ring sector (8) in position, and the assembly (2) being **characterized in that** it further comprises anti-rotation means (38) for rotationally locking the at least one radial retaining pin (34).

2. The assembly as claimed in claim 1, wherein each radial retaining pin (34) is screwed into a bush (36) fitted in the support casing (6).

3. The assembly as claimed in claim 2, wherein each radial retaining pin (34) is rotationally locked inside the bush (36) by a radially-inserted split pin (38), which is disposed between the radial retaining pin (34) and the bush (36).

4. The assembly as claimed in claim 3, wherein each radial retaining pin (34) comprises at its periphery at least one blind drill hole (40), which preferably comprises a tapped hole, extending in the longitudinal direction of the radial retaining pin (34) to make it possible to insert the split pin (38) between the radial retaining pin (34) and the bush (36).

5. The assembly as claimed in claim 4, wherein each radial retaining pin (34) comprises at its periphery a plurality of blind drill holes (40) regularly distributed about a longitudinal axis (X-X) of the radial retaining pin (34).

6. The assembly as claimed in one of claims 4 and 5, wherein each bush (36) comprises a tapped bore (36a) for receiving the radial retaining pin (34), the bore (36a) of the bush (36) being provided with at least one tapped hole (42) extending in the longitudinal direction of the bush to make it possible to screw the radial retaining pin (34).

7. The assembly as claimed in any of claims 1 to 6, wherein, for each ring sector (8), the two lugs (12, 14) are each retained between the two flanges (18, 20) of the support casing (6) by two axial pins (22a, 22b, 24a, 24b) circumferentially offset from one another, and with each axial pin (22a, 22b, 24a, 24b) is associated a radial retaining pin (34) coming to radially bear against the corresponding lug (12, 14) of the ring sector (8) plumb with the axial pin (22a, 22b, 24a, 24b).

8. The assembly as claimed in any of claims 2 to 7, wherein each radial retaining pin (34) comprises a hexagon head recess (44) to allow it to be screwed into the corresponding bush (36).

9. The assembly as claimed in any of claims 2 to 8, wherein each bush (36) is fitted in the support casing (6) and retained therein by interference fitting.

10. A turbomachine comprising an assembly (2) as claimed in any of claims 1 to 9.
